# FASCICULE DE BREVET EUROPEEN

(11) **EP 0 347 823 B1**
(45) Date de publication et mention de la délivrance du brevet: **08.09.1993**
(21) Numéro de dépôt: 89111158.5
(22) Date de dépôt: 20.06.1989
(51) Int. Cl.: H02G 15/14, H02G 15/007

(54) **Dispositif de jonction des armures de deux câbles armés par des fils, et procédé de fabrication de ce dispositif**
Vorrichtung zum Verbinden der Bewehrungen zweier drahtbewehrter Kabel, und Verfahren zum Herstellen dieser Vorrichtung
Device for joining the armour of two cables, armoured by wires, together, and process for manufacturing this device

(30) Priorité: 24.06.1988 FR 8808507
(43) Date de publication de la demande: 27.12.1989
(73) Titulaire: ALCATEL CABLE, 92111 Clichy Cédex (FR)
(72) Inventeur: Bruneval, Gilles, F-59279 Loon Plage (FR)
(74) Mandataire: Weinmiller, Jürgen

(56) Documents cités:
- WO-A-87/04573
- DE-C- 438 288
- GB-A- 196 511
- GB-A- 2 149 981

## Description

La présente invention se rapport à un dispositif de jonction des armures de deux câbles armés par des fils, las armures étant enserrées à chaque extrémité d'un câble, de part et d'autre de leur jonction, entre des pièces coniques, et plus particulièrement à un dispositif destiné à raccorder entre elles les armures faites de couches de fils dont sont revêtus certains câbles d'énergie ou de télécommunications. Ce dispositif de jonction d'armures est normalement la partie extérieure du système de raccordement de deux câbles, la partie intérieure étant constituée par le dispositif de raccordement des câbles eux-mêmes. Elle s'étend en outre à un procédé de fabrication de ce dispositif.

Dans ce qui suit, on désigne par câble un ensemble de conducteurs électriques et/ou optiques contenus dans une enveloppe externe. L'armure fils est constituée de une ou plusieurs, couches de fils généralement métalliques enroulés en hélice autour du câble. Les câbles auxquels s'applique l'invention sont donc des câbles à armure fils.

Ce type de câble revêtu d'une armure fils est largement utilisé lorsque le câble doit pouvoir supporter sans dommages de grands efforts de traction et résister au contact avec des objets pointus ou abrasifs. Un exemple typique est constitué par les câbles sous-marins installés sous une profondeur d'eau moyenne, en particulier au voisinage des côtes, qui doivent pouvoir résister aux ancres marines et aux engins de pêche, ainsi qu'à la traction exercée par leur propre poids entre le navire de pose et le fond marin.

En général, la jonction entre deux câbles revêtus de leurs armures est fréquemment réalisée à bord du navire de pose, conformément à la technique suivante bien connue des hommes de métier. Après avoir reconstitué la continuité électrique et/ou optique des conducteurs électriques et/ou optiques contenus dans l'âme dès câbles, et après avoir reconstitué l'enveloppe de protection externe par un rubanage ou un moulage de matière thermoplastique, ou par la soudure d'un manchon de plomb, les fils d'armure de chaque extrémité de câble de part et d'autre de la jonction sont réenroulés à la main autour de la jonction de telle manière que les fils d'une extrémité s'imbriquent entre les fils de l'autre extrémité au voisinage de la jonction et se recouvrent mutuellement sur une certaine distance de part et d'autre de la jonction, l'ensemble étant maintenu par un ou plusieurs fils auxiliaires enroulés à spires jointives dans chacune des deux zones où les fils d'armure d'une extrémité de câble recouvrent les fils de l'autre extrémité.

La reconstitution de l'armure autour de la jonction selon cette méthode est longue et délicate à réaliser et ne permet pas de garantir que dans la zone de la jonction le câble raccordé pourra supporter un effort de traction aussi grand que dans les zones du câble en dehors de la zone de jonction. En effet, lorsque le câble raccordé est soumis à un effort de traction, les fils d'une extrémité peuvent glisser entre ou sur les fils de l'autre extrémité.

Pour résoudre ce problème, le document FR-A-2 537 357 de la demanderesse propose de raccorder chaque fil d'une extrémité à chaque fil de l'autre extrémité par un manchon fileté à chacune de ses extrémités selon deux pas de filetage inverses. De cette façon les fils d'une extrémité ne peuvent plus glisser par rapport à l'autre, mais la résistance à la traction au niveau des manchons reste cependant plus faible qu'en plein câble du fait que l'opération de filetage diminue la section de chaque fil.

Le document GB-A-196 511 propose de bloquer les fils d'armure de deux câbles au niveau de l'accès de chaque câble dans une boîte de jonction. Pour chaque câble, ce blocage est assuré par deux pièces coniques, qui enserrent entre elles les fils d'armure du câble et sont boulonnées l'une à l'autre et à une paroi d'accès du câble dans la boîte de jonction.

Le document Wo-A-87/04573 propose une autre solution, selon laquelle deux pièces coniques, enserrant également entre elles les fils d'armure de chaque câble, sont serrées l'une contre l'autre par un manchon de recouvrement vissé sur l'accès du câble dans la boîte.

La présente invention a pour but d'obtenir que dans la zone de la jonction les performances mécaniques du câble raccordé soient au moins égales à celles obtenues en dehors de la jonction, conformément à la composition et aux dimensions de la ou des armures fils dont le câble est revêtu. Le même dispositif permet de raccorder les armures de deux câbles lorsque celles-ci ont une structure différente, par exemple le nombre de couches, ou des dimensions différentes, par exemple le diamètre des couches, le nombre des fils ou leur diamètre.

La présente invention a pour objet un dispositif de jonction des armures de deux câbles armés par des fils, les armures étant enserrées à l'extrémité de chacun des câbles, de part et d'autre de leur jonction, entre des premières pièces coniques boulonnées les unes aux autres et à un moyen de liaison des premières pièces coniques sur l'un des câbles à celles sur l'autre câble, caractérisé en ce que ledit moyen de liaison est un ensemble souple de forme générale tubulaire, constitué de trois couches de fils métalliques, de préférence en acier, la première couche, intérieure, étant bobinée en hélice à spires jointives, les deux autres couches étant bobinées avec des pas sensiblement égaux, mais inversés l'un par rapport à l'autre, au-dessus de la première couche, ledit ensemble souple étant équipé à chacune de ses deux extrémités de deuxièmes pièces coniques, entre lesquelles sont enserrées lesdites couches de fils métalliques et sur lesquelles sont boulonnées les premières pièces coniques situées du même côté, et étant initialement monté coulissant au-dessus de l'un au moins des câbles à raccorder démuni de ses couches d'armure et au-dessus de la jonction des câbles eux-mêmes.

Le dispositif selon l'invention permet de réduire considérablement la durée du travail à bord du navire-câblier, l'ensemble souple et les pièces coniques étant fabriquées en usine. En outre, le dispositif a facilement des performances mécaniques égales à celles des armures qu'il réunit. Il suffit pour cela de prévoir convenablement le nombre et le diamètre des fils qui le constituent. Ainsi que déjà mentionné, il permet de raccorder des armures très différentes. Enfin, bien que souple, sa résistance à la flexion peut être facilement rendue égale ou même supérieure à la résistance à la flexion des câbles eux-mêmes. De la sorte, lors de sa pose, le câble raccordé ne peut pas prendre dans la zone de la jonction une courbure inférieure à celle que ladite jonction peut supporter sans dommages.

La présente invention a également pour objet un procédé de fabrication de ce dispositif de jonction, caractérisé par le fait que l'on enfile sur les extrémités des câbles les premières pièces coniques en décablant sur une certaine distance au moins la couche la plus extérieure de fils d'armure de ces extrémités, que l'on enfile l'ensemble souple tubulaire sur l'extrémité de l'un des câbles, que l'on enfile cet ensemble souple tubulaire sur l'extrémité de l'autre câble, en le glissant au-dessus de la jonction, et que l'on boulonne ensemble de chaque côté, lesdites premières et deuxièmes pièces coniques.

Il est décrit ci-après, à titre d'exemple et en référence aux figures schématiques du dessin annexé, un dispositif de jonction des armures fils de deux câbles conformément à l'invention et son procédé de fabrication.

La figure 1 représente schématiquement l'ensemble d'une jonction d'armure conforme à l'invention.

La figure 2 représente en élévation et demi-coupe axiale le détail de la fixation des armures de l'extrémité de câble située à la gauche de la figure 1.

La figure 3 représente le détail en élévation et demi-coupe axiale de l'ensemble souple qui raccorde entre elles les fixations d'armure des deux extrémités du câble.

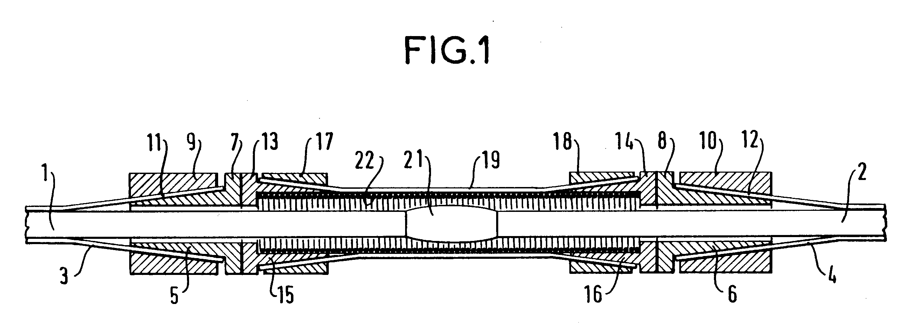

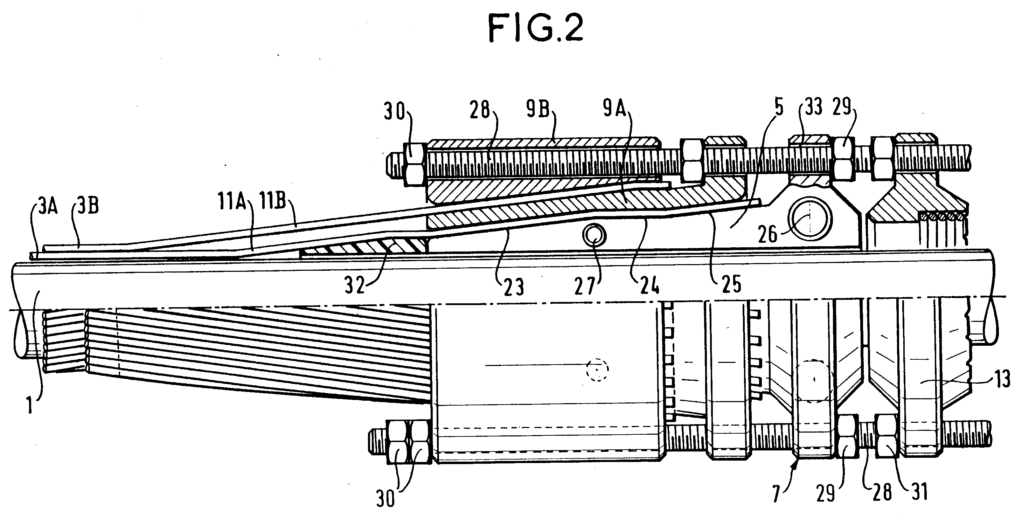

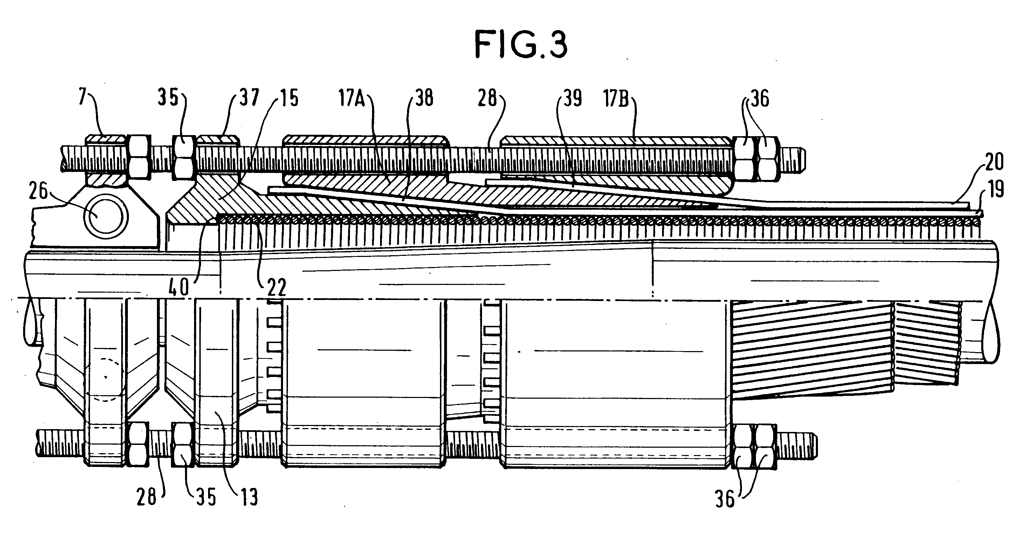

Dans la figure 1, on distingue les extrémités 1 et 2 de deux câbles délimités par leur enveloppe extérieure. Les conducteurs électriques et/ou optiques et l'enveloppe extérieure sont raccordés dans la jonction 21 selon des techniques connues. Les deux câbles sont protégés par une ou plus fréquemment deux couches (que l'on a représenté pour plus de simplicité par une seule 3 ou 4) de fils d'armure dont les extrémités 11 et 12 son enserrées entre les pièces coniques 5 et 9 pour le câble 1, et 6 et 10 pour le câble 2 (les pièces coniques 9 et 10 pouvant être doubles comme représenté en figures 2 et 3). Les pièces coniques mâles 5 et 6 sont solidaires des brides 7 et 8 auxquelles sont fixées les brides 13 et 14 qui constituent les extrémités de l'ensemble souple de jonction des armures 3 et 4 des câbles 1 et 2. Cet ensemble souple se compose d'un enroulement 22 à spires jointives d'un fil d'acier sur lequel reposent deux couches de fils d'acier (ici représentées par une seule couche 19) enroulés en hélice. Le pas d'une couche est inverse du pas de l'autre couche. Les extrémités de la couche 22 sont enfilées à l'intérieur d'un alésage des pièces coniques mâles 15 et 16 qui sont solidarisées avec les brides 13 et 14. Les couches de fils d'acier 19 sont enserrées entre les pièces coniques 15 et 17 à une extrémité et les pièces coniques 16 et 18 à l'autre extrémité.

Les couches 19 supportent les efforts de traction appliqués entre les armures 3 et 4 des câbles 1 et 2. L'enroulement 22 supporte les efforts transversaux engendrés par la mise en tension des couches 19 et empêche donc celles-ci d'écraser le jonction 21.

La figure 2 représente le détail de la fixation des couches de fils d'armure 3A et 3B dans les pièces coniques 5, 9A et 9B. La pièce 5 a la forme d'une coquille délimitée par un alésage cylindrique central et une surface conique externe. Elle est solidaire à son extrémité de plus grand diamètre d'une bride circulaire percée à la périphérie de trous 33 destinés à recevoir des tiges filetées 28. Pour faciliter sa mise en place autour du câble 1, la coquille 5 est coupée en deux parties identiques par un plan diamétral qui est aussi le plan de demi-coupe de la figure. Les deux demi-coquilles sont assujetties l'une à l'autre par deux pions 26 à hauteur de la bride 7 et deux pions 27 de plus petit diamètre à hauteur de la partie conique. L'extrémité 11A de la première couche d'armure est serrée entre la surface conique de la coquille 5 et la surface conique intérieure de la coquille 9A. L'extrémité 11B de la deuxième couche d'armure est serrée entre la surface conique externe de la coquille 9A et la surface conique interne de la coquille 9B. La coquille 9A comporte à son extrémité la plus évasée une collerette circulaire percée de trous à travers lesquels passent les tiges filetées 28. De même la coquille 9B est percée de trous.

La bride 7 et la coquille 9B sont serrées l'une vers l'autre entre les écrous 29 et les écrous et contre-écrous 30 vissés sur les tiges filetées 28 qui se prolongent au-delà de la bride 7 pour assurer la fixation de celle-ci avec la bride 13 et l'ensemble souple de jonction des armures. Pour améliorer l'effet de coincement de la couche d'armure 3A dans les pièces 5 et 9A, les génératrices de la surface externe de la coquille 5 et de la surface interne de la coquille 9A ne sont pas droites mais formées de deux segments de droite 23 et 25 obliques par rapport à l'axe du câble raccordés par un segment de droite 24 parallèle à l'axe du câble. Il pourrait en être de même pour les surfaces en regard des coquilles 9A et 9B. A l'extrémité de la coquille 5, un manchon conique 32 en matière plastique évite que les fils de la couche 3A ne forment un angle vif susceptible d'endommager l'enveloppe du câble.

La figure 3 représente le détail d'une extrémité de l'ensemble souple de jonction des armures. On y distingue l'enroulement 22 à spires jointives d'un fil d'acier et les deux couches 19 et 20 enroulées en hélice autour de la couche 22. Les extrémités 38 et 39 des couches 19 et 20 sont serrées dans les pièces coniques 15, 17A et 17B qui ont une structure similaire aux pièces coniques 5, 9A et 9B précédemment décrites. La coquille 15 est solidaire à son extrémité de plus grand diamètre de la bride 13 percée sur sa périphérie des trous 37 de passage des tiges filetées 28 qui assurent la jonction entre les brides 7 et 13. Les écrous 35 et les écrous et contre-écrous 36 permettent de serrer les extrémités 38 et 39 des couches 19 et 20 dans les cônes des pièces 15, 17A et 17B. La coquille 15, contrairement à la coquille 5, est faite d'une seule pièce. L'enroulement à spires jointives 22 est enfilé à l'intérieur de l'alésage cylindrique de la pièce 15. Il vient en butée contre l'épaulement 40.

Pour le montage, les coquilles 9B et 17B sont enfilées sur les extrémités 1 et 2 des câbles préalablement à la réalisation de la jonction 21 des câbles. Puis les couches 11B et 39 sont décâblées sur une certaine distance. On enfile alors au-dessus des couches 11A et 12A les coquilles 9A et 10A et on décâble les couches 11A et 38 sur une certaine distance. On enfile enfin l'ensemble souple de jonction des armures sur une des extrémités de câble, par exemple l'extrémité 1, dont la longueur de décâblage des armures aura été prévue en conséquence. Le travail ainsi préparé, la jonction 21 peut être réalisée, puis le montage de la fixation d'armure à l'extrémité de câble 2 opposée à celle sur laquelle l'ensemble souple de jonction se trouve en attente. Enfin, l'ensemble souple peut être glissé au-dessus de la jonction 21 et boulonné à la fixation d'armure de l'extrémité 2. On termine par le montage de la fixation d'armure de l'extrémité 1 que l'on fixe à l'ensemble souple. C'est pour faciliter cette dernière opération que les coquilles 5 et 15 sont en deux pièces de sorte qu'elles peuvent être montées sans avoir été préalablement enfilées sur les câbles. Enfin, l'alésage de l'une au moins des brides 13 et 14, selon l'extrémité sur laquelle l'ensemble souple sera mis en attente, doit être suffisant pour que l'ensemble souple puisse glisser au-dessus de la jonction 21, l'alésage de l'autre bride pouvant être juste supérieur aux diamètres des enveloppes des câbles.

## Revendications

1. Dispositif de jonction des armures de deux câbles (1, 2) armés par des fils, les armures étant enserrées à l'extrémité de chacun des câbles, de part et d'autre de leur jonction, entre des premières pièces coniques (5, 9; 6, 10) boulonnées les unes aux autres et à un moyen de liaison des premières pièces coniques sur l'un des câbles à celles sur l'autre câble, caractérisé en ce que ledit moyen de liaison est un ensemble souple de forme générale tubulaire, constitué de trois couches de fils métalliques, de préférence en acier, la première couche, intérieure (22), étant bobinée en hélice à spires jointives, les deux autres couches (19, 20) étant bobinées avec des pas sensiblement égaux, mais inversés l'un par rapport à l'autre, au-dessus de la première couche, ledit ensemble souple étant équipé à chacune de ses deux extrémités de deuxièmes pièces coniques, entre lesquelles sont enserrées lesdites couches de fils métalliques et sur lesquelles sont boulonnées les premières pièces coniques situées du même côté, et étant initialement monté coulissant au-dessus de l'un au moins des câbles à raccorder démuni de ses couches d'armure et au-dessus de la jonction (21) des câbles eux-mêmes.

2. Dispositif selon la revendication 1, caractérisé par le fait que l'ensemble souple est flexible jusqu'à un rayon de courbure inférieur à celui des câbles.

3. Dispositif selon les revendications 1 ou 2, caractérisé par le fait que la section droite des deux autres couches de fils métallique est telle que son allongement élastique soit notablement inférieur à celui des armures des câbles.

4. Procédé de fabrication d'un dispositif de jonction selon l'une des revendications 1 à 3, caractérisé par le fait que l'on enfile sur les extrémités des câbles les premières pièces coniques (9B, 9A, 5) en décâblant sur une certaine distance au moins la couche la plus extérieure (11B) de fils d'armure de ces extrémités, que l'on enfile l'ensemble souple tubulaire sur l'extrémité de l'un des câbles (1), que l'on enfile cet ensemble souple tubulaire sur l'extrémité de l'autre câble (2), en le glissant au-dessus de la jonction, et que l'on boulonne ensemble, de chaque côté, lesdites premières et deuxièmes pièces coniques.

## Claims

1. A splice for joining the armoring of two wire-armored cables (1, 2), the armoring being clamped between first conical parts (5, 9; 6, 10) at each cable end on either side of the splice, these conical parts being secured by bolts to each other and to a means for connecting said first conical parts of one cable to corresponding parts of the other cable, characterized in that said means is a generally tubular flexible assembly constituted by three layers of metal wires, preferably steel wires, with the innermost first layer (22) being wound helically with contiguous turns, and with the other two layers (19, 20) being wound over the first layer at substantially equal pitches but in opposite directions to each other, said flexible assembly being provided at both ends with second conical parts, said layers of metal wires being clamped therebetween, and said second conical parts being bolted to corresponding first conical parts, and said assembly being initially capable of sliding over at least one of the cables to be connected after its armoring layers have been removed, and over the splice (21) between the cables themselves.

2. A splice according to claim 1, characterized in that the flexible assembly is sufficiently flexible to be bent to a smaller radius of curvature than that to which the cables can be bent.

3. A splice according to claim 1 or 2, characterized in that the cross-sections of the other two layers of armoring are such that the elastic elongation thereof is considerably less than the elastic elongation of the cable armoring.

4. A method of making a splice according to any one of claims 1 to 3, characterized in that the first conical parts (9B, 9A, 5) are threaded over the cable ends which have had at least one layer of armoring wires (11B) removed over a certain distance thereof, in that the flexible tubular assembly is threaded over one of the cable ends (1), in that the flexible tubular assembly is threaded over the end of the other cable (2) by being slit over the splice, and that the first and second conical parts are bolted on either side.

## Patentansprüche

1. Vorrichtung zum Verbinden der Bewehrungen zweier drahtbewehrter Kabel (1, 2), wobei die Bewehrungen an jedem Kabelende zu beiden Seiten ihrer Verbindung zwischen erste konische Bauteile (5, 9; 6, 10) eingeklemmt werden, die miteinander und mit einem Mittel zur Verbindung der ersten konischen Bauteile auf einem der Kabel mit den entsprechenden Bauteilen auf dem anderen Kabel verschraubt werden, dadurch gekennzeichnet, daß das Verbindungsmittel eine allgemein rohrförmige biegsame Einheit ist, die aus drei Schichten von Metalldrähten, vorzugsweise aus Stahl, besteht, wobei die erste, innere Schicht (22) spiralförmig mit aneinanderliegenden Windungen gewickelt ist, während die beiden anderen Schichten (19, 20) mit im wesentlichen gleichen Wicklungsschritten, aber umgekehrten Wicklungsrichtungen auf die erste Schicht aufgewickelt werden, wobei die nachgiebige Einheit an jedem ihrer Enden zweite konische Bauteile besitzt, zwischen denen die Schichten von Metalldrähten eingeklemmt werden und an die die ersten konischen Bauteile, die sich auf derselben Seite befinden, angeschraubt werden, und wobei die nachgiebige Einheit vorher auf mindestens einem der aneinander anzuschließenden und von ihren Bewehrungsschichten befreiten Kabeln und über der eigentlichen Verbindung (21) der Kabel gleitend montiert worden ist.

2. Vorrichtung nach Anspruch 1, dadurch gekennzeichnet, daß die nachgiebige Einheit bis zu einem Krümmungsradius flexibel ist, der geringer als der der Kabel ist.

3. Vorrichtung nach Anspruch 1 oder 2, dadurch gekennzeichnet, daß der Querschnitt der beiden weiteren Schichten von Metalldrähten so gewählt ist, daß die elastische Längung deutlich geringer als die der Bewehrungen der Kabel ist.

4. Verfahren zur Herstellung einer Verbindungsvorrichtung nach einem der Ansprüche 1 bis 3, dadurch gekennzeichnet, daß man auf die Enden der Kabel die ersten konischen Bauteile (9B, 9A, 5) aufsteckt, indem man mindestens die äußere Schicht (11B) von Bewehrungsdrähten an diesen Enden über eine gewisse Länge ablöst, daß die rohrförmige nachgiebige Einheit auf das Ende eines der Kabel (1) aufgesteckt wird, daß die rohrförmige nachgiebige Einheit auf das Ende des anderen Kabels (2) aufgesteckt wird, indem es über die Verbindung gleitet, und daß auf jeder Seite die ersten und zweiten konischen Bauteile miteinander verschraubt werden.
